# EUROPÄISCHE PATENTSCHRIFT

(11) **EP 3 479 158 B1**
(45) Veröffentlichungstag und Bekanntmachung des Hinweises auf die Patenterteilung: **12.10.2022**
(21) Anmeldenummer: 17734078.3
(22) Anmeldetag: 29.06.2017
(51) Int. Cl.: G02B 21/00, G02B 21/36, G02B 21/02

(54) **ANORDNUNG ZUR MIKROSKOPIE UND ZUR KORREKTUR VON ABERRATIONEN**
ARRANGEMENT FOR MICROSCOPY AND FOR CORRECTION OF ABERRATIONS
DISPOSITIF DE MICROSCOPIE ET POUR LA CORRECTION D'ABERRATIONS

(30) Priorität: 01.07.2016 DE 102016212020
(43) Veröffentlichungstag der Anmeldung: 08.05.2019
(73) Patentinhaber: Carl Zeiss Microscopy GmbH, 07745 Jena (DE)
(72) Erfinder: SIEBENMORGEN, Jörg, 07743 Jena (DE); LIPPERT, Helmut, 07745 Jena (DE); KALKBRENNER, Thomas, 07745 Jena (DE); KLEPPE, Ingo, 07749 Jena (DE); WOLLESCHENSKY, Ralf, 07743 Jena (DE); DEGEN, Artur, 07743 Jena (DE); WALD, Matthias, 07751 Jena (DE); WITTIG, Lars-Christian, 07745 Jena (DE); GÖLLES, Michael, 07745 Jena (DE); SINGER, Wolfgang, 73431 Aalen (DE)
(74) Vertreter: Meyer, Jork
(86) Internationale Anmeldenummer: PCT/EP2017/066136
(87) Internationale Veröffentlichungsnummer: WO 2018/002225

(56) Entgegenhaltungen:
- WO-A1-2015/071362
- WO-A1-2015/071363
- WO-A1-2016/054474
- DE-A1-102010 039 746
- DE-A1-102013 107 297

## Beschreibung

Die Erfindung betrifft ein Mikroskop gemäß dem Oberbegriff des unabhängigen Anspruchs 1. Eine der Hauptanwendungen der Lichtblattmikroskopie liegt in der Bildgebung mittelgroßer Proben, beispielsweise von Organismen, mit einer Größe von einigen 100 µm bis hin zu wenigen Millimetern. In der Regel werden diese Proben in Agarose eingebettet und in einer Glaskapillare angeordnet. Zur Untersuchung der Probe wird die Glaskapillare in eine wassergefüllte Probenkammer eingebracht. Die Agarose mit der Probe wird ein Stück weit aus der Kapillare herausgedrückt und mit einem Lichtblatt beleuchtet. Die in der Probe angeregte und von dieser ausgehende Fluoreszenz wird mit einem Detektionsobjektiv, das senkrecht zum Lichtblatt und damit auch senkrecht zur Lichtblattoptik (=Beleuchtungsoptik, Beleuchtungsobjektiv) steht, auf einen Detektor, insbesondere eine Kamera, abgebildet.

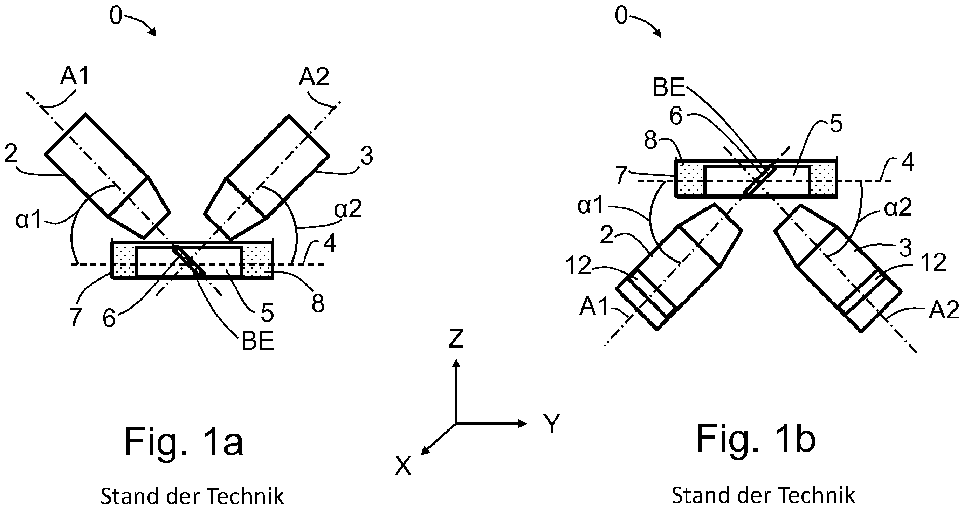

Ein Aufbau eines Mikroskops 0 für die Lichtblattmikroskopie (SPIM-Aufbau; Single Plane Illumination Microscopy) umfasst gemäß dem Stand der Technik ein Beleuchtungsobjektiv 2 mit einer ersten optischen Achse A1 und ein Detektionsobjektiv 3 mit einer zweiten optischen Achse A2 (auch als SPIM-Objektive bezeichnet), die jeweils unter einem Winkel α1 beziehungsweise a2 von 45° zu einer Probenebene 4 und einem rechten Winkel zueinander von oben auf die Probenebene 4 gerichtet sind (siehe Fig. 1a). Eine in der Probenebene 4, die auch als Bezugsebene genutzt wird, in einem dafür vorgesehenen Probenbereich angeordnete Probe 5 befindet sich zum Beispiel auf dem Boden einer als Petrischale ausgebildeten Probenhalterung 7. Die Probenhalterung 7 ist mit einem Medium 8, beispielsweise Wasser, gefüllt und die beiden SPIM-Objektive 2, 3 sind während der Anwendung der Lichtblattmikroskopie in das Medium 8 eingetaucht (nicht gezeigt). Die Probenebene 4 erstreckt sich in einer durch die X-Achse X und die Y-Achse Y eines kartesischen Koordinatensystems aufgespannten Ebene X-Y. Die erste optische Achse A1 und die zweite optische Achse A2 verlaufen in einer durch die Y-Achse Y und die Z-Achse Z des kartesischen Koordinatensystems aufgespannten Ebene Y-Z.

Die Fig. 1b zeigt schematisch ein Mikroskop 0 mit einer inversen Anordnung von Beleuchtungsobjektiv 2 und Detektionsobjektiv 3 gemäß dem Stand der Technik, bei dem das Beleuchtungsobjektiv 2 und das Detektionsobjektiv 3 unterhalb der Probenebene 4 angeordnet sind. Die Winkel α1 und α2 betragen wieder je 45°.

Dieser Ansatz bietet den Vorteil einer hohen Auflösung in axialer Richtung, da mittels des Beleuchtungsobjektivs 2 ein dünnes Lichtblatt 6 (siehe auch Fig. 1a) erzeugt werden kann. Aufgrund der höheren Auflösung können kleinere Proben 5 untersucht werden. Zusätzlich wird die störende Hintergrundfluoreszenz deutlich reduziert und damit das Signal/Hintergrund-Verhältnis verbessert. Um eine einfachere Probenpräparation in Standard-Probenbehältern wie z. B. Multiwellplatten zu ermöglichen, kann die 45°-Konfiguration zwar beibehalten werden, aber die beiden SPIM-Objektive 2, 3 sind in einer inversen Anordnung von unten durch den transparenten Boden der Probenhalterung 7 in die Probenebene 4 gerichtet (Fig. 1b). In dieser Anordnung müssen die durch die relativ zu den optischen Achsen A1 und A2 geneigte und in Form eines Deckglases vorhandene Probenhalterung 7 hervorgerufenen Aberrationen durch spezielle optische Elemente korrigiert werden. Durch den Boden der Probenhalterung 7 wird die in der Probenebene 4 angeordnete Probe 5 beleuchtet und eine angeregte Fluoreszenz der Probe 5 detektiert. Es können

Probenhalter 7, wie z. B. Multiwellplatten, Petrischalen und/oder Objektträger genutzt und eine Kontamination der Proben 5, insbesondere beim High-Throughput-Screening, vermieden werden.

Weitere technische Schwierigkeiten treten auf, wenn in dem Strahlengang des Beleuchtungsobjektivs 2 und/oder des Detektionsobjektivs 3 beispielsweise Alvarezplatten eines Alvarez-Manipulators 12 (Fig. 1b, vereinfachend sind die Alvarezplatten bezeichnet) angeordnet sind, wie diese beispielsweise aus der US 3305294 A bekannt sind. Die Alvarezplatten sind so ausgebildet, dass sie genau bei einem festgelegten Winkel zwischen der Probenhalterung 7, beispielsweise einem Deckglas, und der optischen Achse A1, A2 des jeweiligen Objektivs 2, 3 auftretende Aberrationen korrigieren. Schon bei einer kleinen Abweichung des Winkels (z. B. <0.1°) treten unerwünschte Aberrationen auf, die zu einer verringerten Abbildungsqualität führen. Daher muss vor dem Beginn eines Experiments beispielsweise das Deckglas ausgerichtet werden, so dass die Winkelabweichung innerhalb der zulässigen Toleranzen liegt. Des Weiteren ist es hilfreich, wenn neben dem Winkel auch der Abstand zwischen dem Objektiv 2, 3 beziehungsweise einer eventuell vorhandenen Zusatzlinse und dem Deckglas einstellbar ist, so dass die Probe 5 beziehungsweise dessen abzubildender Bereich, in der Bildebene BE des Detektionsobjektivs 3 liegt.

Aus der DE 10 2013 112 600 A1 ist ein Virtuelles Relay bekannt, das zur Korrektur von Fehlern dient, die bei einem schiefen Durchgang der Strahlen durch einen Objektträger entstehen. Da das Virtuelle Relay eine hohe Numerische Apertur > 1,2 aufweist, können durch geringe Abweichung innerhalb des optischen Systems, die von Experiment zu Experiment verschieden sein können, ausgeprägte Abbildungsfehler auftreten. Die Abweichungen können u.a. auf der Varianz der Deckglasdicke, Temperaturänderungen, Brechzahlunterschiede, Verkippung des Deckglases oder Keilfehlern des Deckglases beruhen.

Es gibt mehrere Möglichkeiten, diese Aberrationen zu korrigieren. So ist in der DE 10 2013 112 595 A1 und in der DE 10 2014 104 977 A1 die Anordnung eines Alvarez-Manipulators innerhalb des Detektionsobjektivs beschrieben. Hierzu wird zum einen eine Freiform-Korrekturlinse verwendet, die entweder zwischen der Probe und dem Detektionsobjektiv angeordnet ist, oder die Frontlinse des Objektivs darstellt. Es werden Mikroskopobjektive beschrieben, welche die Aberrationen des schiefen Durchgangs der Beleuchtungs- und Detektionsstrahlung durch ein Deckglas korrigiert.

Gemäß der DE 10 2013 107 297 A1 können in einem Objektiv Schiebelinsen zur Korrektur von Aberrationen vorgesehen sein. Eine weitere, ebenfalls in der DE 10 2013 107 297 A1 beschriebene Möglichkeit besteht in der Anordnung adaptiver Spiegel oder räumlicher Modulatoren für Licht (spatial light modulator; SLM) im Frequenzraum (z. B. in einer Pupille) außerhalb des Objektivs.

Eine weitere Möglichkeit zur Korrektur von Aberrationen eines Mikroskops, die durch ein Deckglas bedingt sind, ist aus der Publikation von McGorty et al. (2015: Open-top selective plane illumination microscope for conventionally mounted specimens; OPTICS EXPRESS 23: 16142 - 16153) bekannt. Das inverse SPIM-Mikroskop weist ein Wasserprisma auf, durch dessen Wirkung Aberrationen teilweise kompensiert werden, die infolge des schrägen Durchgangs des Detektionslichts durch das Deckglas auftreten.

Der Erfindung liegt die Aufgabe zugrunde, gegenüber dem Stand der Technik verbesserte Möglichkeiten zur Korrektur von Aberrationen vorzuschlagen, die insbesondere aufgrund schräger Durchgänge von Beleuchtungsstrahlung und Detektionsstrahlung durch optisch brechende Schichten auftreten. Insbesondere soll verbesserte Mikroskope, und hier wiederum insbesondere Lichtblattmikroskope, vorgeschlagen werden.

Die Aufgabe wird durch ein Mikroskop gemäß dem Anspruch 1 gelöst. Vorteilhafte Ausführungen und Weiterbildungen sind Gegenstand der abhängigen Ansprüche.

Die Aufgabe wird mittels eines Mikroskops gelöst. Das Mikroskop umfasst eine Beleuchtungsoptik mit einem Beleuchtungsobjektiv zur Beleuchtung einer auf einem Probenträger in einem Probenbereich befindlichen Probe über einen Beleuchtungsstrahlengang, wobei die optische Achse des Beleuchtungsobjektivs in einer Ebene liegt, die mit der Normalen einer Bezugsebene, hinsichtlich welcher der Probenträger ausgerichtet ist, einen von Null verschiedenen Winkel (Beleuchtungswinkel) einschließt. Die Beleuchtung mittels des Beleuchtungsobjektivs erfolgt in der genannten Ebene. Weiterhin ist eine Detektionsoptik mit einem Detektionsobjektiv in einem Detektionsstrahlengang vorhanden. Die optische Achse des Detektionsobjektivs schließt mit der Normalen der Bezugsebene einen von Null verschiedenen Winkel (Detektionswinkel) ein. Das Detektionsobjektiv umfasst ein im Strahlengang angeordnetes oder in diesen einbringbares Detektionskorrekturelement und/oder das Beleuchtungsobjektiv umfasst ein im Strahlengang angeordnetes oder in diesen einbringbares Beleuchtungskorrekturelement.

Erfindungsgemäß ist zwischen dem Probenträger und den beiden Objektiven eine Meniskuslinse vorhanden, die sowohl in dem Beleuchtungsstrahlengang als auch in dem Detektionsstrahlengang angeordnet ist. Die Meniskuslinse ist zur Korrektur von Aberrationen ausgebildet, die aufgrund des Durchtritts von zu detektierender Strahlung, insbesondere von Licht, beziehungsweise von Strahlung zur Beleuchtung der Probe durch Medien unterschiedlicher Brechkraft entstehen. Das Korrekturelement beziehungsweise die Korrekturelemente ist beziehungsweise sind zur Korrektur von verbliebenen Aberrationen ausgebildet.

In der Probenebene, die auch als Bezugsebene bezeichnet wird, ist die Probe in einem dafür vorgesehenen Bereich, den Probenbereich, angeordnet oder kann dort angeordnet werden.

Die Beleuchtung erfolgt flächig. Zur Vereinfachung der Beschreibung wird im Folgenden auch von einem Korrekturelement beziehungsweise von Korrekturelementen gesprochen, wenn sich die Beschreibung sowohl auf ein Beleuchtungskorrekturelement als auch auf ein Detektionskorrekturelement, oder auf beide bezieht.

Verbliebene Aberrationen können solche (Rest-)Abbildungsfehler sein, die aus einer unvollständigen Korrektur der Aberrationen aufgrund des schrägen Durchgangs der Strahlungen, seien es Beleuchtungsstrahlung und/oder Detektionsstrahlung, resultieren. Ferner sind verbliebene Aberrationen Fehler beispielsweise aufgrund einer Varianz der Deckglasdicke, Temperaturänderungen, Brechzahlunterschiede durchstrahlter Schichten, Verkippungen des Deckglases oder Keilfehler des Deckglases beruhen. Diese verbliebenen Aberrationen werden korrigiert oder zumindest reduziert. Einem Deckglas sind beispielsweise der Boden eines Probengefäßes oder ein Objektträger aus einem anderen Material als Glas gleichzusetzen.

Das Mikroskop kann ein Trennschichtsystem mit mindestens einer Schicht aus einem vorgegebenen Material mit vorgegebener Dicke aufweisen. Die mindestens eine Schicht, beispielsweise ein Deckglas, trennt ein Medium, in welchem sich die Probe befindet, von dem Beleuchtungsobjektiv und dem Detektionsobjektiv. Das Trennschichtsystem steht mit einer parallel zur Bezugsebene ausgerichteten Grundfläche zumindest in dem für das Beleuchtungsobjektiv und das Detektionsobjektiv für Beleuchtung beziehungsweise Detektion zugänglichen Bereich mit dem Medium und/oder mit einem Immersionsmedium in Kontakt. Das Medium und das Immersionsmedium sind durch das Trennschichtsystem voneinander separiert.

Die Aberrationen und die verbliebenen Aberrationen sind für einen vorgegebenen Bereich von Beleuchtungswinkeln bzw. von Detektionswinkeln und/oder für einen vorgegebenen Bereich der Dicke der mindestens einen Schicht des Trennschichtsystems reduzierbar.

Eine Meniskuslinse ist eine Linse, die zwei nach derselben Seite gekrümmte Linsenflächen besitzt. Vorteilhaft weisen die beiden Linsenflächen denselben Mittelpunkt auf. Die beiden Linsenflächen der Meniskuslinse können sich in unterschiedlichen Medien, beispielsweise Immersionsmedien und/oder Luft, mit jeweils unterschiedlichem Brechungsindex befinden. Die Meniskuslinse hat gegenüber dem aus dem Stand der Technik bekannten Virtuellen Relay und gegenüber ebenfalls vorbekannten Freiform-Korrekturlinsen den Vorteil, dass sie einfacher und kostengünstiger herzustellen ist, da keine Freiformflächen aufwendig erzeugt werden müssen.

Die Meniskuslinse kann ortsfest gehaltert sein. Die Fokussierung erfolgt durch Verschieben der Probe samt Probenträger oder durch Verschieben der Objektive entlang deren optischer Achse.

Mittels der Meniskuslinse sind Fehler korrigiert oder korrigierbar, die beim Übergang der Beleuchtungsstrahlung und/oder Detektionsstrahlung zwischen zwei Medien oder Schichten unterschiedlicher Brechzahl auftreten. Aberrationen aufgrund des schiefen Durchgangs werden hingegen nicht korrigiert. Diese verbleibenden Aberrationen können außerhalb und/oder innerhalb des Objektivs mittels des Beleuchtungskorrekturelements und/oder mittels des Detektionskorrekturelements (Korrekturelemente) korrigiert werden.

Um ein erfindungsgemäßes Lichtblattmikroskop zu realisieren, ist eine zur Beleuchtung verwendete Strahlung zu einem Lichtblatt geformt und in den Probenbereich gerichtet. In alternativen Ausführungen wird das Lichtblatt mittels der Beleuchtungsstrahlung in dem Probenbereich erzeugt, indem beispielsweise ein Strahlenbündel der Beleuchtungsstrahlung in der Ebene bewegt wird (dynamisches Lichtblatt). Dabei liegen die optische Achse des Beleuchtungsobjektivs und das Lichtblatt in einer Ebene, die mit der Normalen der Bezugsebene einen von Null verschiedenen Beleuchtungswinkel einschließt.

In einer Ausführung des Mikroskops ist das optische Korrekturelement in einer Pupille des Detektionsobjektivs und/oder des Beleuchtungsobjektivs angeordnet. Beleuchtungsobjektiv und Detektionsobjektiv werden im Folgenden auch vereinfachend als Objektive bezeichnet.

Eine Anordnung des optischen Korrekturelements in einer Pupille oder möglichst nahe der Pupille vermeidet vorteilhaft unerwünschte feldabhängige Effekte. In der Pupille wirkt das Korrekturelement für alle Feldpunkte gleich. Je größer eine Distanz zwischen der Pupille und dem jeweiligen optischen Korrekturelement ist, desto mehr Feldabhängigkeiten kommen zum Tragen, sodass die unerwünschten feldabhängigen Effekte mit zunehmender Distanz stärker ausgeprägt sind.

In einer möglichen Ausführung des erfindungsgemäßen Mikroskops ist das optische Korrekturelement nahe der Pupille angeordnet, wenn sich dieses innerhalb der Schärfentiefe beispielsweise der Tubuslinse des Detektionsobjektivs beziehungsweise des Beleuchtungsobjektivs befindet.

Sowohl das optische Beleuchtungskorrekturelements als auch das optische Detektionskorrekturelement kann beziehungsweise können als statische Korrekturelemente oder als adaptive Korrekturelemente ausgebildet sein.

Statische Korrekturelemente sind beispielsweise mindestens eine Phasenplatte oder eine Freiformlinse. Die Freiformlinse muss nicht zwingend in der Pupille platziert sein und kann beispielsweise die Frontlinse des jeweiligen Objektivs sein. Ein statisches Korrekturelement wie die Phasenplatte bewirkt eine Korrektur statischer Anteile der Aberrationen.

Um verbundene Restaberrationen des Aufbaus sowie probeninduzierte Aberrationen auszugleichen, lassen sich adaptive Korrekturelemente im Beleuchtungs- und Detektionsstrahlengang der Anordnung unterbringen. Dynamische oder variable Anteile der Aberrationen können mittels wenigstens eines adaptiven Korrekturelements korrigiert sein, wobei das adaptive Korrekturelement innerhalb oder außerhalb des Objektivs beziehungsweise der Objektive angeordnet ist beziehungsweise angeordnet sind. Ein adaptives Korrekturelement ist hinsichtlich seiner Korrekturwirkung einstellbar und adaptiv ausgebildet. Somit sind vorteilhaft dynamische Korrekturen der Aberrationen, insbesondere der verbliebenen Aberrationen ermöglicht.

Statische und adaptive Korrekturelemente können in einem erfindungsgemäßen Mikroskop kombiniert sein. So ist in einer möglichen Ausführung der Erfindung das statische Korrekturelement eine Phasenplatte zur Korrektur statischer Aberrationen und im Beleuchtungs- und/oder im Detektionsstrahlengang ist ein adaptives Korrekturelement angeordnet.

Ist jedem Objektiv ein adaptives Korrekturelement zugeordnet oder weist jedes der Objektive ein adaptives Korrekturelement auf, kann eines der adaptiven Korrekturelemente innerhalb und das andere adaptive Korrekturelement außerhalb des jeweiligen Objektivs vorhanden sein.

Zweckmäßigerweise ist ein adaptives Korrekturelement in einer Pupillenebene des Mikroskops so angeordnet, dass die wirksame Öffnung des adaptiven Korrekturelements und die Größe des veränderlichen adaptiven Korrekturelements oder der veränderlichen adaptiven Korrekturelemente gut zur Größe der Pupille in der Pupillenebene passen und gewünschte Wellenfrontdeformationen für die zu kompensierenden Aberrationen eingestellt werden können und/oder einen erforderlichen Phasenhub für die zu kompensierenden Aberrationen zu liefern. Beispielsweise erreicht man diese Anpassung sowie die Zugänglichkeit des adaptiven Korrekturelements durch eine Pupillenrelay-Optik, welche die Objektivpupille des Beleuchtungs- oder Detektionsobjektives auf das adaptive Korrekturelement abbildet. Ausreichend kleine adaptive Korrekturelemente lassen sich auch direkt im oder unmittelbar nach dem Objektiv anordnen.

Adaptive Korrekturelemente sind beispielsweise adaptive Spiegel oder mindestens ein räumlicher Modulator für Licht (SLM, spatial light modulator). Der SLM kann als ein reflektierender SLM oder als ein transmissiver SLM ausgebildet sein.

Das adaptive Korrekturelement ist in weiteren Ausführungen ein Alvarez-Manipulator, mindestens ein adaptiver Spiegel, mindestens eine Kipplinse, mindestens eine Schiebelinse, mindestens eine verformbare optische Linse oder eine Kombination daraus.

In einer weiteren Ausführung der Erfindung ist das adaptive Korrekturelement ein räumlicher Modulator für Licht während im Strahlengang eines der Objektive, insbesondere im

Detektionsstrahlengang, eine Zylinderlinse zur Teilkompensation von auftretenden Aberrationen vorhanden ist.

Es ist ferner möglich, dass das adaptive Korrekturelement ein adaptiver Spiegel ist und im Strahlengang eines der Objektive, insbesondere im Detektionsstrahlengang, eine Zylinderlinse zur Teilkompensation von auftretenden Astigmatismus vorhanden ist.

In einer Ausführung mit einem adaptiven Spiegel wird mittels eines Teleskops die Pupille des Objektivs, sei es das Beleuchtungsobjektiv oder das Detektionsobjektiv, auf den adaptiven Spiegel abgebildet. Der adaptive Spiegel wird so verformt, dass durch diesen die auftretenden Aberrationen korrigiert und reduziert werden. Ein nahezu oder gänzlich aberrationsfreies Bild kann mittels einer weiteren im Detektionsstrahlengang angeordneten optischen Linse auf dem Kamerasensor erzeugt werden.

Ist das adaptive Korrekturelement durch einen reflektierenden SLM realisiert, wird mittels eines Teleskops die Pupille des Objektivs auf den SLM abgebildet. Auf dem SLM wird ein Phasenmuster angezeigt, durch dessen Wirkung die auftretenden Aberrationen korrigiert und reduziert werden. Wiederum kann ein nahezu oder gänzlich aberrationsfreies Bild mittels einer weiteren im Detektionsstrahlengang angeordneten optischen Linse auf dem Kamerasensor erzeugt werden.

Der SLM ist in einer weiteren Ausführung mit einer Zylinderlinse kombiniert. Die Zylinderlinse wird z. B. in der Pupille des Objektivs verwendet, um eine Teilkorrektur der auftretenden Aberrationen durchzuführen. Mittels eines Teleskops wird die Pupille des Objektivs auf einen reflektierenden SLM abgebildet. Auf dem SLM wird ein Phasenmuster angezeigt, durch dessen optische Wirkung die verbleibenden Restaberrationen korrigiert und reduziert werden . Durch eine dritte Linse wird ein nahezu oder gänzlich aberrationsfreies Bild auf dem Kamerasensor erzeugt.

Die adaptiven Korrekturelemente können im Beleuchtungs- und/oder im Detektionsstrahlengang angeordnet sein.

Des Weiteren können die Aberrationen auch innerhalb des Objektivs korrigiert werden.

Dazu wird zum Beispiel im Objektiv eine zusätzliche Pupille geschaffen, an deren Stelle das adaptive Korrekturelement platziert wird, um die auftretenden Aberrationen zu korrigieren. Auch hier kann eine Zylinderlinse verwendet werden, um eine Teilkorrektur der Aberrationen durchzuführen.

Die Erfindung ist insbesondere in Form eines inversen Lichtblattmikroskops mit schrägem Durchgang der Beleuchtungs- und Detektionsstrahlung durch eine Probenhalterung beispielsweise in Form eines Deckglases oder einer optisch transparenten Schicht wie dem Boden einer Petrischale geeignet.

Die Erfindung wird nachfolgend anhand von Ausführungsbeispielen und Abbildungen näher erläutert. Dabei zeigen:
Fig. 1a eine schematische Darstellung einer Anordnung eines Lichtblattmikroskops gemäß dem Stand der Technik,
Fig. 1b eine schematische Darstellung einer inversen Anordnung eines Lichtblattmikroskops gemäß dem Stand der Technik,
Fig. 2 eine schematische Darstellung eines ersten Ausführungsbeispiels einer erfindungsgemäßen Anordnung eines Lichtblattmikroskops,
Fig. 3 eine schematische Darstellung eines zweiten Ausführungsbeispiels einer erfindungsgemäßen Anordnung eines Lichtblattmikroskops,
Fig. 4 eine schematische Darstellung eines dritten Ausführungsbeispiels einer erfindungsgemäßen Anordnung eines Lichtblattmikroskops,
Fig. 5 eine schematische Darstellung eines vierten Ausführungsbeispiels einer erfindungsgemäßen Anordnung eines Lichtblattmikroskops und
Fig. 6 eine schematische Darstellung eines Ausführungsbeispiels eines Objektivs zur Verwendung in einem der erfindungsgemäßen Anordnungen eines Mikroskops.

Die Fig. 1a und 1b wurden bereits im einleitenden Teil der Beschreibung näher erläutert. Die Darstellung der Ausführungsbeispiele erfolgt schematisch. Gleiche technische Elemente sind mit den gleichen Bezugszeichen versehen.

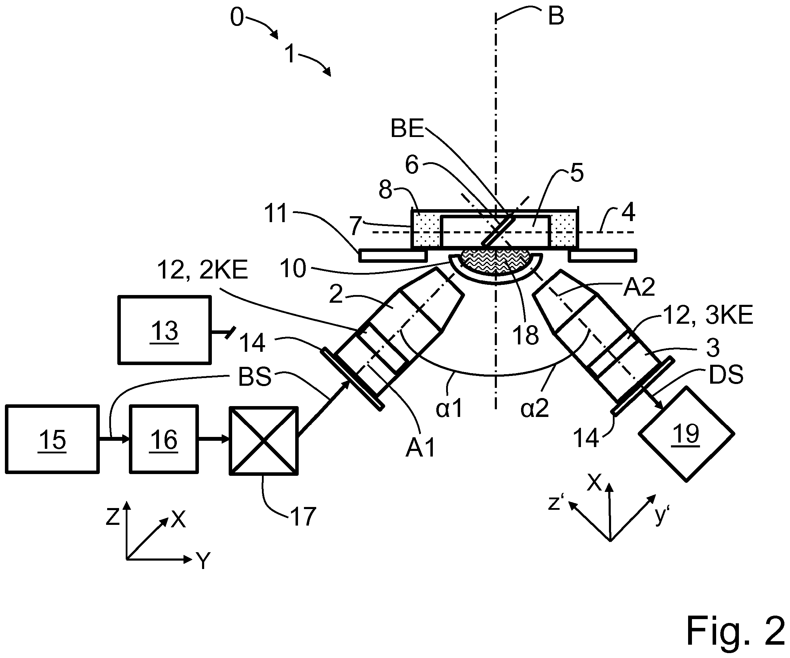

Als wesentliche Elemente einer erfindungsgemäßen Anordnung zur Mikroskopie, insbesondere zur Lichtblattmikroskopie, sind neben dem schräg zur Proben- oder Bezugsebene 4 ausgerichteten Beleuchtungsobjektiv 2 und dem ebenfalls schräg zur Bezugsebene 4 ausgerichteten Detektionsobjektiv 3 eine gemeinsam genutzte Meniskuslinse 10 (Fig. 2) sowie wenigstens ein Beleuchtungskorrekturelement 2KE in dem Beleuchtungsobjektiv 2und/oder wenigstens ein Detektionskorrekturelement 3KE in dem Detektionsobjektiv 3 vorhanden.

Die nachfolgenden Ausführungsbeispiele sind beispielhaft anhand inverser Mikroskope 0 dargestellt und können in weiteren Ausführungen auch als aufrechte Mikroskope 0 ausgebildet sein.

Ein Ausführungsbeispiel eines zur Lichtblattmikroskopie ausgebildeten Anordnung 1 eines inversen Mikroskops 0 (nur symbolisch dargestellt) mit Korrekturelementen 2KE, 3KE und einer Meniskuslinse 10 ist in Fig. 2 dargestellt. Die Winkel α1 und α2 zwischen einer senkrecht auf der Bezugsebene 4 stehenden Normalen B und der ersten optischen Achse A1 beziehungsweise der zweiten optischen Achse A2 betragen je 45°. Als adaptive Korrekturelemente 2KE, 3KE sind jeweils zwei Alvarezplatten eines Alvarez-Manipulators 12 in dem Strahlengang der Beleuchtungsstrahlung BS und in dem Strahlengang der Detektionsstrahlung DS angeordnet. Die Korrekturelemente 2KE, 3KE dienen der Korrektur von Aberrationen, die aufgrund des schrägen Durchgangs der Beleuchtungsstrahlung BS durch den Boden der Probenhalterung 7 auftreten können. Die Meniskuslinse 10 unterstützt den Übergang der Beleuchtungsstrahlung BS von Luft in ein Immersionsmedium 18 und in das Medium 8 sowie den Übergang der Detektionsstrahlung DS von dem Medium 8 in das Immersionsmedium 18 und in die Luft.

Die Probenhalterung 7 ist auf dem Probentisch 11 gehalten. Der Probentisch 11 selbst ist in einer durch die X-Achse X und die Y-Achse Y aufgespannten X-Y-Ebene mittels nicht näher dargestellter Antriebe gesteuert verstellbar.

Das Beleuchtungsobjektiv 2 und das Detektionsobjektiv 3 sind jeweils mittels eines Objektivantriebs 14, der hier als ein Piezoantrieb ausgebildet ist, entlang der ersten optischen Achse A1 beziehungsweise entlang der zweiten optischen Achse A2 gesteuert verstellbar.

Die Beleuchtungsstrahlung BS wird durch ein Lasermodul 15 bereitgestellt und mittels einer Strahlformungseinheit 16 geformt. Die Strahlformungseinheit 16 ist beispielsweise eine Optik, mittels der die bereitgestellte Beleuchtungsstrahlung BS geformt, beispielsweise kollimiert, wird.

Der Strahlformungseinheit 16 nachgeordnet ist ein Scanner 17 vorhanden, mittels dem die geformte Beleuchtungsstrahlung BS gesteuert in zwei Richtungen ablenkbar ist (X-Y-Scanner).

Nach dem Scanner 17 ist das Beleuchtungsobjektiv 2 auf der ersten optischen Achse A1 angeordnet. Die von dem Scanner 17 abgelenkte Beleuchtungsstrahlung BS gelangt zu dem Beleuchtungsobjektiv 2 und wird durch dieses geformt und/oder fokussiert. Das Lichtblatt 6 wird durch eine entsprechende Ablenkung der Beleuchtungsstrahlung BS mittels des Scanners 17 in einem Probenbereich erzeugt, in dem sich die Probe 5 befindet.

Die von der Probe 5 und aus dem Probenbereich kommende Detektionsstrahlung DS ist entlang der zweiten optischen Achse A2 auf einen Detektor 19 gerichtet und durch diesen erfassbar.

Zur Ansteuerung des Probentischs 11, der Objektivantriebe 14, der Korrekturelemente 2KE, 3KE, des Lasermoduls 15, der Strahlformung 16, des Scanners 17 und/oder des Detektors 19 ist eine Steuereinheit 13 vorhanden, die mit den anzusteuernden Elementen in einer zur Datenübertragung geeigneten Verbindung steht (nur angedeutet gezeigt).

In weiteren Ausführungen ist die Steuereinheit 13 zusätzlich zur Erfassung, Speicherung und/oder zur Auswertung von Messwerten konfiguriert. Mittels der Steuereinheit 13 können weitere Elemente sowie Einheiten des Mikroskops 0 ansteuerbar sein und/oder Messwerte von diesen erhalten und ausgewertet werden.

Es werden im Folgenden zur Beschreibung zwei Koordinatensysteme mit zueinander orthogonalen Achsen genutzt. Das erste Koordinatensystem ist das Koordinatensystem der gesamten Anordnung mit einer X-Achse X, einer Y-Achse Y und einer Z-Achse Z. Idealerweise ist die Probenhalterung 7, insbesondere deren Boden, parallel zu einer durch die X-Achse X und die Y-Achse Y aufgespannte X-Y-Ebene ausgerichtet. Das zweite Koordinatensystem ist das Koordinatensystem des Detektors 19 mit der X-Achse X, einer y-Achse y' und einer z-Achse z'. Eine Abbildung beispielsweise eines Bildes aus der Bildebene BE auf dem Detektor 19 besitzt die Koordinaten X und y'. Die X-Achse X ist in beiden Koordinatensystemen orthogonal zur Zeichenebene der Figuren gerichtet. Die beiden anderen Achsen Y und y' beziehungsweise Z und z', können durch eine Rotation um die X-Achse X ineinander überführt werden.

Aberrationen, die bei einem schiefen Durchgang der Beleuchtungsstrahlung BS durch die Probenhalterung 7 auftreten, sind von deren Dicke abhängig. Aus diesem Grund sind beispielsweise die Korrekturelemente 2KE, 3KE verschiebbar in den Beleuchtungsobjektiv 2 und/oder dem Detektionsobjektiv 3 gelagert, um durch eine Verschiebung der Korrekturelemente 12 zueinander eine Aberrationskorrektur auf die Dicke abzustimmen.

Der Boden der Probenhalterung 7 stellt ein Trennschichtsystem mit mindestens einer Schicht aus einem vorgegebenen Material mit vorgegebener Dicke dar, welche ein Medium 8, in dem sich die Probe 5 befindet, von dem Beleuchtungsobjektiv 2 und dem Detektionsobjektiv 3 trennt. Das Trennschichtsystem steht mit einer parallel zur Probenebene 4 ausgerichteten Grundfläche zumindest in dem für das Beleuchtungsobjektiv 2 und das Detektionsobjektiv 3 für die Beleuchtung beziehungsweise die Detektion zugänglichen Bereich mit dem Immersionsmedium 18 in Kontakt.

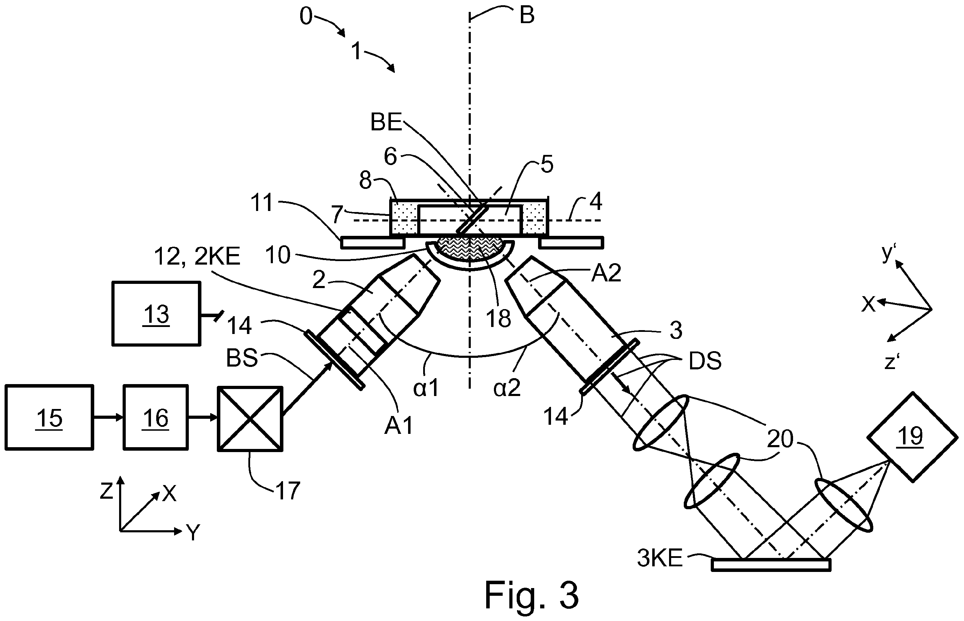

In einem in der Fig. 3 dargestellten zweiten Ausführungsbeispiel des Mikrokops (0), dass im grundsätzlichen Aufbau dem in der Fig. 2 dargestellten Ausführungsbeispiel entspricht, weist das Beleuchtungsobjektiv 2 wiederum einen Alvarez-Manipulator 12 als

Beleuchtungskorrekturelemente 2KE auf. Im Strahlengang der Detektionsstrahlung DS sind optische Linsen 20 vorhanden, mittels denen die Detektionsstrahlung DS auf ein

Detektionskorrekturelement 3KE in Form eines SLM oder eines adaptiven Spiegels gelenkt wird. Die von dem Detektionskorrekturelement 3KE reflektierte Detektionsstrahlung DS wird auf einen Detektor 19 gerichtet und durch diesen erfasst.

In einer weiteren Ausführungsmöglichkeit ist der SLM als ein transmissiver SLM ausgebildet.

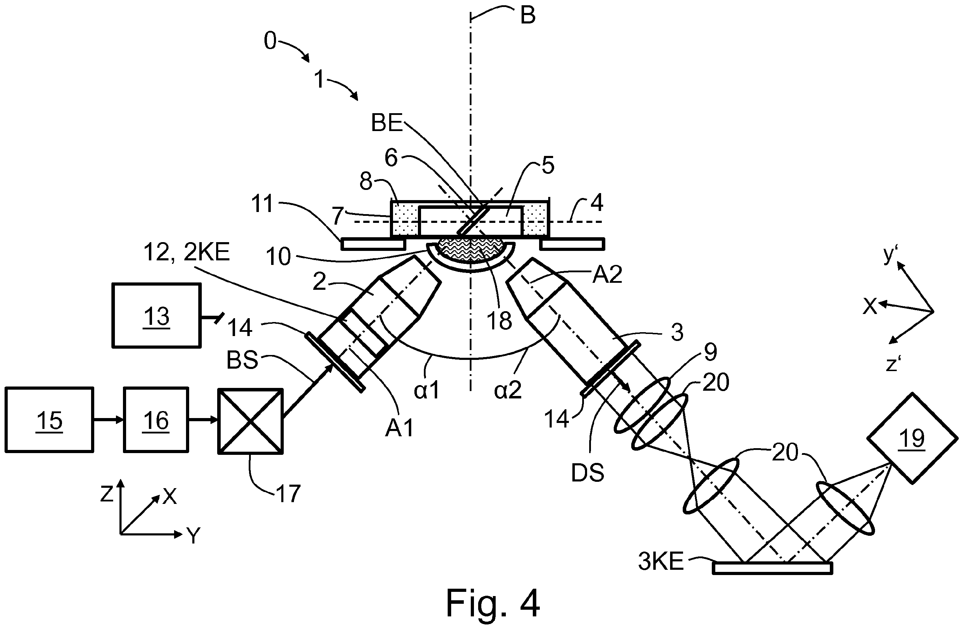

Die Fig. 4 zeigt ein drittes Ausführungsbeispiel der Erfindung, wobei in dem Strahlengang der Detektionsstrahlung DS vor den optischen Linsen 20 eine Zylinderlinse 9 angeordnet ist, die einer Teilkompensation von auftretenden Astigmatismus dient. Das Detektionskorrekturelement 3KE ist in Form eines SLM oder eines adaptiven Spiegels umgesetzt.

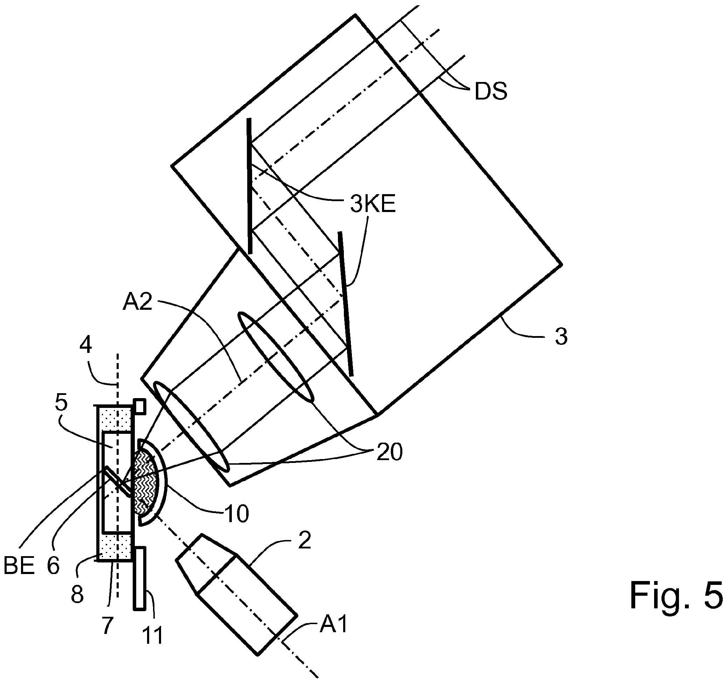

Ein weiteres Ausführungsbeispiel eines erfindungsgemäßen Mikroskops (0) ist in der Fig. 5 dargestellt. Das Beleuchtungsobjektiv 2 weist kein Beleuchtungskorrekturelement 2KE auf. In dem Detektionsobjektiv 3 sind zwei Detektionskorrekturelemente 3KE integriert und als reflektive(-r) SLM und/oder als adaptive(-r) Spiegel ausgestaltet.

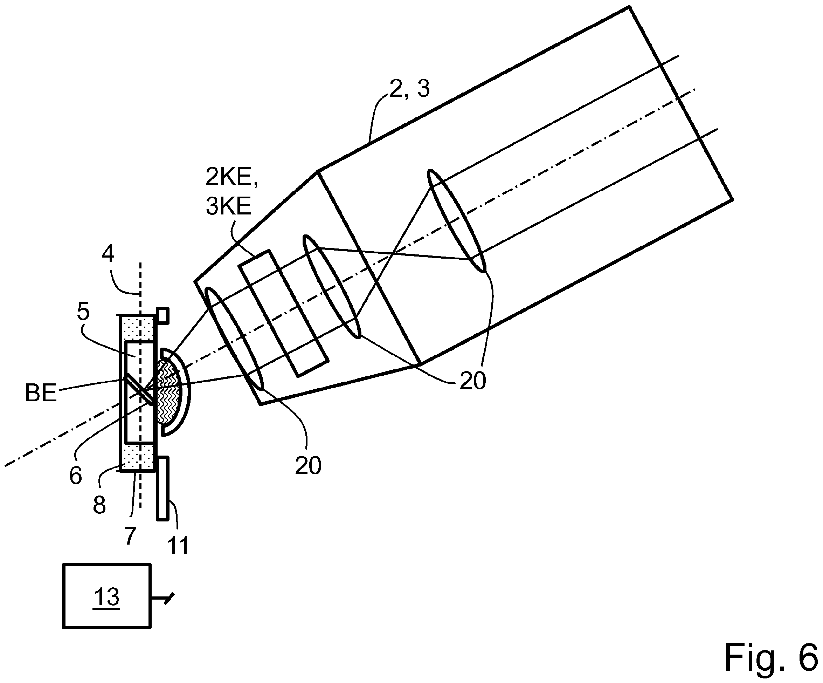

Ein Ausführungsbeispiel eines Objektivs 2,3 zur Verwendung in einem erfindungsgemäßen Mikroskop 0 (siehe Fig. 2 bis 5) ist in der Fig. 6 schematisch dargestellt.

Neben den lediglich beispielhaft gezeigten optischen Linsen 20 ist in dem Strahlengang ein als ein SLM ausgebildetes ansteuerbares Korrekturelement 2KE beziehungsweise 3KE angeordnet. Die Ansteuerung erfolgt mittels der Steuereinheit 13.

In weiteren Ausführungen des Mikroskops (0) oder des Objektivs 2, 3 können Schiebelinsen vorgesehen sein, die radial zum Strahlengang verschiebbar sind um verbliebene Aberrationen auszugleichen oder zumindest zu reduzieren.

In dem in Fig. 6 dargestellten Mikroskop (0) ist der besseren Übersichtlichkeit halber nur ein Objektiv 2, 3 gezeigt.

### Bezugszeichen

- 0: Mikroskop
- 1: Anordnung
- 2: Beleuchtungsobjektiv
- 2KE: Beleuchtungskorrekturelement
- 3: Detektionsobjektiv
- 3KE: Detektionskorrekturelement
- 4: Probenebene (= Bezugsebene)
- 5: Probe
- 6: Lichtblatt
- 7: Probenhalterung
- 8: Medium
- 9: Zylinderlinse
- 10: Meniskuslinse
- 11: Probentisch
- 12: Alvarez-Manipulator
- 13: Steuereinheit
- 14: Objektivantrieb
- 15: Lasermodul
- 16: Strahlformung
- 17: X-Y-Scanner
- 18: Immersionsmedium
- 19: Detektor
- 20: optische Linse
- A1: erste optische Achse (optische Achse des Beleuchtungsobjektivs 2)
- A2: zweite optische Achse (optische Achse des Detektionsobjektivs 3)
- α1: Winkel / Beleuchtungswinkel
- a2: Winkel / Detektionswinkel
- B: Normale
- BE: Bildebene
- BS: Beleuchtungsstrahlung
- DS: Detektionsstrahlung

## Patentansprüche

1. Mikroskop (0), umfassend
- eine zu einer Probenebene (4) ausgerichtete Probenhalterung (7);
- eine Beleuchtungsoptik mit einem Beleuchtungsobjektiv (2) zur Beleuchtung einer auf der Probenhalterung (7) in einem Probenbereich der Probenebene (4) befindlichen Probe (5) über einen Beleuchtungsstrahlengang, wobei
- eine zur Beleuchtung verwendete Strahlung zu einem Lichtblatt (6) geformt und in den Probenbereich gerichtet ist und die optische Achse (A1) des Beleuchtungsobjektivs (2) und das Lichtblatt (6) in einer Ebene liegen, die mit der Normalen der Probenebene (4) einen von Null verschiedenen Beleuchtungswinkel (α1) einschließt, und die Beleuchtung in der Ebene erfolgt,
- eine Detektionsoptik mit einem Detektionsobjektiv (3) in einem Detektionsstrahlengang, dessen optische Achse (A2) mit der Normalen der Probeneben (4) einen von Null verschiedenen Detektionswinkel (α2) einschließt und senkrecht zum Lichtblatt (6) steht,
- das Beleuchtungsobjektiv (2) ein im Strahlengang angeordnetes Beleuchtungskorrekturelement (2KE) umfasst und/oder
- das Detektionsobjektiv (3) ein im Strahlengang angeordnetes Detektionskorrekturelement (3KE) umfasst,
**dadurch gekennzeichnet, dass**
- zwischen der Probenhalterung (7) und den Objektiven (2, 3) eine Meniskuslinse (10) vorhanden ist, die sowohl in dem Beleuchtungsstrahlengang als auch in dem Detektionsstrahlengang angeordnet ist, wobei die Meniskuslinse (10) zwei nach derselben Seite gekrümmte Linsenflächen besitzt und die beiden Linsenflächen denselben Mittelpunkt aufweisen;
- die Meniskuslinse (10) zur Korrektur von Aberrationen, die aufgrund des Durchtritts von zu detektierender Strahlung und/oder von Strahlung zur Beleuchtung der Probe durch Medien unterschiedlicher Brechkraft entstehen, ausgebildet ist und
- das Beleuchtungskorrekturelement (2KE) und/oder das Detektionskorrekturelement (3KE) zur Korrektur von verbliebenen Aberrationen ausgebildet ist.

2. Mikroskop (0) nach Anspruch 1, **dadurch gekennzeichnet, dass** das Beleuchtungskorrekturelement (2KE) und/oder das Detektionskorrekturelement (3KE) in einer Pupille des Beleuchtungsobjektivs (2) und/oder des Detektionsobjektivs (3) angeordnet ist.

3. Mikroskop (0) nach einem der Ansprüche 1 und 2, **dadurch gekennzeichnet, dass** das Beleuchtungskorrekturelement (2KE) und/oder das Detektionskorrekturelement (3KE) mindestens eine Phasenplatte oder eine Freiformlinse ist.

4. Mikroskop (0) nach einem der Ansprüche 1 und 2, **dadurch gekennzeichnet, dass** das Beleuchtungskorrekturelement (2KE) und/oder das Detektionskorrekturelement (3KE) eine Phasenplatte zur Korrektur statischer Aberrationen ist und im Beleuchtungsstrahlengang und/oder im Detektionsstrahlengang ein adaptiver Spiegel oder ein räumlicher Modulator für Licht vorhanden ist.

5. Mikroskop (0) nach einem der Ansprüche 1 und 2, **dadurch gekennzeichnet, dass** das Beleuchtungskorrekturelement (2KE) und/oder das Detektionskorrekturelement (3KE) hinsichtlich seiner Korrekturwirkung einstellbar und adaptiv ausgebildet ist.

6. Mikroskop (0) nach Anspruch 5, **dadurch gekennzeichnet, dass** das adaptive Beleuchtungskorrekturelement (2KE) und/oder das adaptive Detektionskorrekturelement (3KE) ein Alvarez-Manipulator (12), ein räumlicher Modulator für Licht, mindestens ein adaptiver Spiegel, mindestens eine Kipplinse, mindestens eine Schiebelinse, mindestens eine verformbare optische Linse oder eine Kombination daraus ist.

7. Mikroskop (0) nach Anspruch 5, **dadurch gekennzeichnet, dass** das adaptive Beleuchtungskorrekturelement (2KE) und/oder das adaptive Detektionskorrekturelement (3KE) ein räumlicher Modulator für Licht ist und im Detektionsstrahlengang eine Zylinderlinse (9) zur Teilkompensation von auftretendem Astigmatismus vorhanden ist.

8. Mikroskop (0) nach Anspruch 5, **dadurch gekennzeichnet, dass** das adaptive Detektionskorrekturelement (3KE) ein adaptiver Spiegel ist und im Beleuchtungsstrahlengang und/oder im Detektionsstrahlengang eine Zylinderlinse (9) zur Teilkompensation von auftretenden Aberrationen vorhanden ist.

9. Mikroskop (0) nach einem der vorhergehenden Ansprüche, **gekennzeichnet durch** ein Trennschichtsystem mit mindestens einer Schicht aus einem vorgegebenen Material mit vorgegebener Dicke, welche ein Medium (8), in dem sich die Probe (5) befindet, von dem Beleuchtungsobjektiv (2) und dem Detektionsobjektiv (3) trennt, wobei das Trennschichtsystem mit einer parallel zur Probenebene (4) ausgerichteten Grundfläche zumindest in dem für das Beleuchtungsobjektiv (2) und das Detektionsobjektiv (3) für Beleuchtung beziehungsweise Detektion zugänglichen Bereich mit einem Immersionsmedium (18) in Kontakt steht.

## Claims

1. Microscope (0), comprising
- a specimen carrier (7) aligned with respect to a specimen plane (4);
- an illumination optical unit with an illumination objective (2) for illuminating, by way of an illumination beam path, a specimen (5) situated on the specimen carrier (7) in a specimen region of the specimen plane (4), wherein
- a radiation utilized for illumination purposes is shaped into a light sheet (6) and directed into the specimen region, and the optical axis (A1) of the illumination objective (2) and the light sheet (6) lie in a plane that includes an illumination angle (α1) that differs from zero with the normal of the specimen plane (4), and the illumination is implemented in the plane,
- a detection optical unit with a detection objective (3) in a detection beam path, the optical axis (A2) of which includes a detection angle (α2) that differs from zero with the normal of the specimen plane (4) and is perpendicular to the light sheet (6),
- the illumination objective (2) comprises an illumination correction element (2KE) that is arranged in the beam path, and/or
- the detection objective (3) comprises a detection correction element (3KE) that is arranged in the beam path,
**characterized in that**
- a meniscus lens (10) is present between the specimen carrier (7) and the objectives (2, 3), said meniscus lens being arranged both in the illumination beam path and in the detection beam path, wherein the meniscus lens (10) has two lens surfaces curved to the same side and the two lens surfaces have the same centre;
- the meniscus lens (10) is embodied to correct aberrations that arise on account of the passage through media with different refractive indices of radiation to be detected and/or radiation for illuminating the specimen, and
- the illumination correction element (2KE) and/or the detection correction element (3KE) is embodied to correct remaining aberrations.

2. Microscope (0) according to Claim 1, **characterized in that** the illumination correction element (2KE) and/or the detection correction element (3KE) is arranged in a pupil of the illumination objective (2) and/or of the detection objective (3).

3. Microscope (0) according to either of Claims 1 and 2, **characterized in that** the illumination correction element (2KE) and/or the detection correction element (3KE) is at least one phase plate or a free-form lens.

4. Microscope (0) according to either of Claims 1 and 2, **characterized in that** the illumination correction element (2KE) and/or the detection correction element (3KE) is a phase plate for correcting static aberrations and an adaptive mirror or a spatial light modulator is present in the illumination beam path and/or in the detection beam path.

5. Microscope (0) according to either of Claims 1 and 2, **characterized in that** the illumination correction element (2KE) and/or the detection correction element (3KE) has an adjustable and adaptive embodiment in respect of its corrective power.

6. Microscope (0) according to Claim 5, **characterized in that** the adaptive illumination correction element (2KE) and/or the adaptive detection correction element (3KE) is an Alvarez manipulator (12), a spatial light modulator, at least one adaptive mirror, at least one tilt lens, at least one sliding lens, at least one deformable optical lens or a combination thereof.

7. Microscope (0) according to Claim 5, **characterized in that** the adaptive illumination correction element (2KE) and/or the adaptive detection correction element (3KE) is a spatial light modulator and a cylindrical lens (9) is present in the detection beam path for partial compensation of occurring astigmatism.

8. Microscope (0) according to Claim 5, **characterized in that** the adaptive detection correction element (3KE) is an adaptive mirror and a cylindrical lens (9) is present in the illumination beam path and/or in the detection beam path for partial compensation of occurring aberrations.

9. Microscope (0) according to any one of the preceding claims, **characterized by** a separation layer system with at least one layer made of a predetermined material with a predetermined thickness, which separates a medium (8), in which the specimen (5) is situated, from the illumination objective (2) and the detection objective (3), wherein, by means of a base that is aligned parallel to the specimen plane (4), the separation layer system is in contact with an immersion medium (18), at least in the region accessible to the illumination objective (2) and the detection objective (3) for illumination and detection purposes, respectively.

## Revendications

1. Microscope (0), comprenant
- un porte-échantillon (7) aligné sur un plan d'échantillon (4) ;
- une optique d'éclairage pourvue d'un objectif d'éclairage (2) servant à éclairer un échantillon (5) se trouvant sur le porte-échantillon (7) dans une zone d'échantillon du plan d'échantillon (4) à travers une trajectoire de faisceau d'éclairage, dans lequel
- un rayonnement utilisé pour l'éclairage est formé en une feuille de lumière (6) et est dirigé vers la zone d'échantillon, et l'axe optique (A1) de l'objectif d'éclairage (2) et la feuille de lumière (6) sont situés dans un plan qui forme avec la normale du plan d'échantillon (4) un angle d'éclairage (α1) différent de zéro, et l'éclairage a lieu dans le plan,
- une optique de détection pourvue d'un objectif de détection (3) dans une trajectoire de faisceau de détection dont l'axe optique (A2) forme avec la normale du plan d'échantillon (4) un angle de détection (α2) différent de zéro et est perpendiculaire à la feuille de lumière (6),
- l'objectif d'éclairage (2) comprend un élément de correction d'éclairage (2KE) disposé dans la trajectoire de faisceau, et/ou
- l'objectif de détection (3) comprend un élément de correction de détection (3KE) disposé dans la trajectoire de faisceau,
**caractérisé en ce que**
- entre le porte-échantillon (7) et les objectifs (2, 3), une lentille à ménisque (10) est présente qui est disposée à la fois dans la trajectoire de faisceau d'éclairage et dans la trajectoire de faisceau de détection, la lentille à ménisque (10) possédant deux surfaces de lentille courbées vers le même côté, et les deux surfaces de lentille présentant le même centre ;
- la lentille à ménisque (10) est réalisée pour corriger des aberrations qui apparaissent en raison du passage d'un rayonnement à détecter et/ou d'un rayonnement d'éclairage de l'échantillon à travers des fluides ayant différents indices de réfraction, et
- l'élément de correction d'éclairage (2KE) et/ou l'élément de correction de détection (3KE) sont réalisés pour corriger des aberrations résiduelles.

2. Microscope (0) selon la revendication 1, **caractérisé en ce que** l'élément de correction d'éclairage (2KE) et/ou l'élément de correction de détection (3KE) est/sont disposé(s) dans une pupille de l'objectif d'éclairage (2) et/ou de l'objectif de détection (3).

3. Microscope (0) selon l'une quelconque des revendications 1 et 2, **caractérisé en ce que** l'élément de correction d'éclairage (2KE) et/ou l'élément de correction de détection (3KE) correspond(ent) à au moins une lame de phase ou à une lentille de forme libre.

4. Microscope (0) selon l'une quelconque des revendications 1 et 2, **caractérisé en ce que** l'élément de correction d'éclairage (2KE) et/ou l'élément de correction de détection (3KE) correspond(ent) à une lame de phase servant à corriger des aberrations statiques, et un miroir adaptatif ou un modulateur spatial de lumière est présent dans la trajectoire de faisceau d'éclairage et/ou dans la trajectoire de faisceau de détection.

5. Microscope (0) selon l'une quelconque des revendications 1 et 2, **caractérisé en ce que** l'élément de correction d'éclairage (2KE) et/ou l'élément de correction de détection (3KE) est/sont réalisé(s) de manière réglable et adaptative quant à leur effet correcteur.

6. Microscope (0) selon la revendication 5, **caractérisé en ce que** l'élément de correction d'éclairage adaptatif (2KE) et/ou l'élément de correction de détection adaptatif (3KE) correspond(ent) à un manipulateur d'Alvarez (12), à un modulateur spatial de lumière, à au moins un miroir adaptatif, à au moins une lentille basculante, à au moins une lentille coulissante, à au moins une lentille optique déformable ou à une combinaison de ceux-ci.

7. Microscope (0) selon la revendication 5, **caractérisé en ce que** l'élément de correction d'éclairage adaptatif (2KE) et/ou l'élément de correction de détection adaptatif (3KE) correspond(ent) à un modulateur spatial de lumière, et dans la trajectoire de faisceau de détection, une lentille cylindrique (9) est présente pour la compensation partielle d'un astigmatisme qui apparaît.

8. Microscope (0) selon la revendication 5, **caractérisé en ce que** l'élément de correction de détection adaptatif (3KE) est un miroir adaptatif, et dans la trajectoire de faisceau d'éclairage et/ou dans la trajectoire de faisceau de détection, une lentille cylindrique (9) est présente pour la compensation partielle d'aberrations qui apparaissent.

9. Microscope (0) selon l'une quelconque des revendications précédentes, **caractérisé par** un système de couche de séparation comprenant au moins une couche d'un matériau prédéfini d'une épaisseur prédéfinie, qui sépare un fluide (8) dans lequel se trouve l'échantillon (5) de l'objectif d'éclairage (2) et de l'objectif de détection (3), le système de couche de séparation, au moyen d'une surface de base orientée en parallèle au plan d'échantillon (4), étant en contact avec un fluide d'immersion (18), au moins dans la zone accessible à l'objectif d'éclairage (2) et à l'objectif de détection (3) pour l'éclairage ou la détection, respectivement.
